# EUROPEAN PATENT SPECIFICATION

(11) **EP 1 602 817 B1**
(45) Date of publication and mention of the grant of the patent: **21.03.2007**
(21) Application number: 05106228.9
(22) Date of filing: 10.12.2003
(51) Int. Cl.: F02D 41/36

(54) **Method for changing fuel delivery rate for hydrogen fuelled internal combustion engine**
Verfahren zur Veränderung der Kraftstoffzufuhr für einen wasserstoffangetriebenen Verbrennungsmotor
Procédé de changement du débit d'alimentation de carburant pour moteur à combustion interne à hydrogène

(30) Priority: 04.01.2003 US 437906 P; 26.06.2003 US 482164 P; 27.06.2003 US 482735 P; 11.08.2003 US 493525 P; 17.10.2003 US 512832 P
(43) Date of publication of application: 07.12.2005
(62) Divisional of application: 03777057.5
(73) Proprietor: Ford Global Technologies, LLC, Dearborn, MI 48126 (US)
(72) Inventor: Grabowski, Tony, Gary, Sterling Heights, MI (US); Jaura, Arun, 48188, Caton (US); Ortmann, Walt, 48176, Saline (US); Natkin, Robert, 48187, Canton (US); Szwabowski, Steven, Northville, MI 48167 (US); Oltmans, Bret, 48336, Farmington Hills (US); Jih, Edward, Troy, MI 48084 (US); Denlinger, Adam, Saline, MI 48176 (US); Dhillon, Jaswant, 48187, Canton (US)
(74) Representative: Messulam, Alec Moses

(56) References cited:
- EP-A- 0 420 599
- GB-A- 2 005 348
- US-A- 5 698 043
- PATENT ABSTRACTS OF JAPAN vol. 012, no. 120 (M-685), 14 April 1988 (1988-04-14) & JP 62 247152 A (MITSUBISHI ELECTRIC CORP), 28 October 1987 (1987-10-28)

## Description

### Field of the Invention

The present invention relates to a method of operating for a hydrogen fuelled internal combustion engine and is useful for use in such an engine when incorporated into a vehicle having a hybrid electric powertrain.

### Background Art

Automotive manufacturers in recent years have intensified research and development efforts to implement and commercialise more quickly vehicular fuel cell and gasoline hybrid electric vehicle (HEV) technologies. Fuel cell technologies utilize electro-chemical conversion devices, such as PEM and solid oxide fuel cells, to generate drive power with zero tailpipe emissions. Gasoline hybrids, while not completely eliminating tailpipe emissions, can significantly improve fuel economy at a fraction of the cost of present-day fuel cell technologies.

Alternatively, powertrains combining the benefits of hydrogen-powered internal combustion engines and hybrid electric functionality have been proposed. In U.S. Patent Application Publication 2002/0098414, for example, a very low emission hybrid electric vehicle is disclosed having a hydrogen-powered internal combustion engine, a metal hydride hydrogen storage unit, an electric motor and a nickel metal hydride battery. The problem however, due to the low power density of hydrogen gas when used in an internal combustion engine, is the ability of the powertrain to deliver gasoline engine-like performance over a wide range of operating speeds. This is so because hydrogen internal combustion engines are usually operated with a fuel-lean air/fuel ratio in order to preserve combustion stability.

As such, the inventors herein have recognized the need to adapt conventional internal combustion engine and HEV technologies to utilize hydrogen fuel and thus achieve substantial reductions in tailpipe emissions while maintaining hybrid functionality and performance comparable to conventional gasoline-powered engines.

The present invention provides an improved method of operating a hydrogen fuelled engine having pulsed fuel injectors.

JP-A-62247152 describes an air-fuel ratio controller for an internal combustion engine having low flow rate and high flow rate injectors. The controller changes the frequency division ratio for an air flow sensor for drive pulses to injector under a prescribed condition and uses both the low flow rate and the high flow rate injectors when operating under a heavy engine load.

In accordance with the present invention, there is provided a method for changing the fuel delivery rate for a hydrogen fuelled internal combustion engine having pulsed fuel injectors including, for each cylinder, a low flow fuel injector and a high flow fuel injector, comprising the steps of:
increasing the fuel delivery rate by increasing the pulse width of the low flow injector until the flow rate has reach an overlap value;
operating the high flow injector at a rate approaching the overlap value; and
simultaneously decreasing the pulse width of the low flow injector such that the total flow from the high and low flow injectors is equal to the maximum flow from the low flow injector.

Preferably, the method further comprises the steps of decreasing the fuel rate from a higher fuelling rate by decreasing the pulse width of the high flow rate injector until the flow rate has reached the overlap value; and simultaneously operating said low flow injector at the overlap value, while turning said high flow injector off.

### Brief description of the drawings

The invention will now be described further, by way of example, with reference to the accompanying drawings, in which :
FIG. 1 is a schematic diagram showing an embodiment of hydrogen-fuel internal combustion for use in the hybrid powertrain;
FIG. 2 is a flow chart of a method in accordance with the invention for changing fuel flow with hydrogen fuel injectors having different maximum flow rates; and
FIG 3 is a flow chart illustrating of a method for sensing an intake manifold backfire in a hydrogen-fuelled internal combustion engine.

### Detailed Description Of The Preferred Embodiments

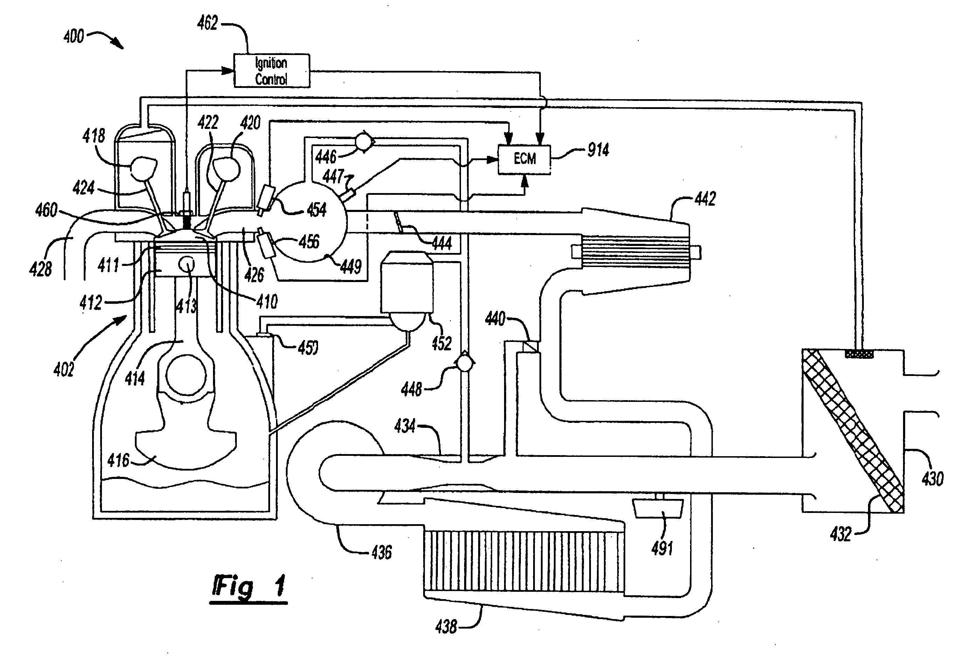

FIG. 1 shows a schematic diagram of hydrogen-fuelled internal combustion engine 400 for use as part of a hybrid powertrain system. The hydrogen gas burning engine 400, by way of example and not limitation, is a four-stroke, port fuel injected internal combustion engine having a plurality of cylinders 402 (only one shown), with each of the cylinders having a combustion chamber 410 and a corresponding reciprocating piston 412 cooperating with a connecting rod 414 and a crankshaft 416. The piston 412 is optimised for a compression ratio of approximately 12.2:1 and is constructed from forged aluminium piston. Piston 412 also features a substantially flat piston head and a ring pack 411 optimised for 120 bar peak cylinder pressure. A fully floating, bush-type piston pin 413 attaches the piston 412 to connecting rod 414, which is machined from 4340 steel and shortened, compared to a similar gasoline engine connecting rod, to accommodate the ring pack 411.

Camshaft assemblies 418 and 420 are mechanically coupled with intake and exhaust valves 422 and 424, respectively, which are operated to communicate with respective intake and exhaust manifolds. Preferably, the valves 422 and 424 included a Stellite ® facing and hardened valve seats to improve wear resistance due to reduced lubricity of the hydrogen fuel

A dual rail fuel injector system, shown collectively by reference numerals 454 and 456, includes high fuel flow rate injectors 454 (only one shown) and low fuel flow injectors 456 (again only one shown). The injectors 454 and 456, preferably disc-type gaseous fuel injectors, are controlled by an engine control module 914 (ECM), which regulates the supply of hydrogen fuel from a compressed gas, metal hydride or other hydrogen storage medium. Because hydrogen has a very wide combustion range, the ECM 914 nominally operates the fuel injectors 454 and 456 to provide a lean air/fuel mixture in each of the combustion chambers 410. By way of example and not limitation, the engine 400 can be operated with an air/fuel ratio of approximately 86:1 during highway cruising, compared to approximately 14.7:1 with a similar conventional gasoline-powered engine.

Operation of the engine 400 in a lean regime allows improved fuel efficiency without pre-ignition or so-called engine "knock." In one embodiment, low flow rate injectors 456 are operated at low engine speed, and high flow rate injectors 454 are operated at high engine speeds. Fuel is injected into each of the combustion chambers 410 only when the intake valve 422 is open and the exhaust valve 424 is closed. This "late fuel injection timing" allows for induction air cooling of the exhaust valve 424 during overlap period, so as to minimize occurrence of backflash/backfire. Advantageously, the "end of injection timing" is fixed at 180 degrees (BDC of intake stroke) with a period of 20 to 170 degrees such that fuel is never injected before the exhaust valves are closed.

Fuel injectors 454 and 456 have partially overlapping flow rates. In other words, the minimum practicable flow rate for high flow rate injectors 454 is equivalent to the maximum flow rate of low flow injectors 456. This allows wide-scale changes in fuel delivery rate to be accommodated without undesirable discontinuities. This is accomplished by using electronically controlled injectors which are opened for variable periods of time, with such periods being termed pulse width.

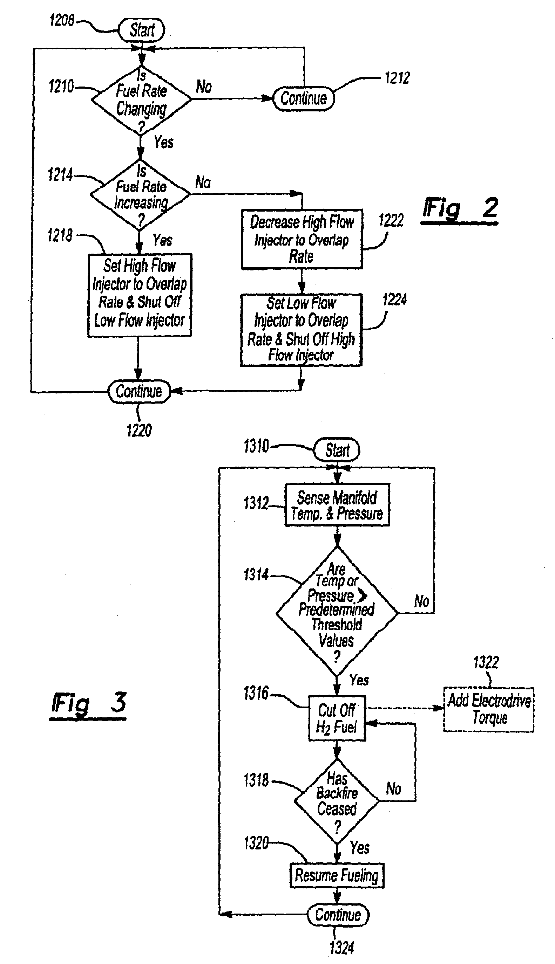

A flow chart for implementing the method of the invention is shown in FIG. 2. In this flow chart, commencing with the start block 1208 it will be seen that if it is determined in block 1210 that the fuel rate is not changing, the system simply loops back by way of the continue block 1212 to the start block 1208, taking no action in the process.

When hydrogen flow is being increased, as when the answer to the question posed at block 1214 is "yes", then in the block 1218 the pulse width of low flow injectors 456 will be increased by the ECM 914 to an overlap flow rate value, at which time high flow injectors 454 will be operated with a pulse width corresponding to the overlap value. Simultaneously within the block 1218, the pulse width of low flow injectors 456 will be reduced such that the total flow from both sets of injectors is the same as the previous overlap flow rate from low flow injectors 456. Thereafter, the flow rate of high flow injectors 454 may be further increased by the ECM 914, and the flow rate of low flow rate injectors may be further decreased, until low flow rate injectors 456 are shut off. In cases where fuel delivery is being decreased from a high fuelling rate, the pulse width of the high fuel rate injectors 454 will be decreased at block 1222 to the overlap value, and at block 1224 low rate injectors 456 will be operated at the overlap value, while high rate injectors 456 are simultaneously turned off.

The ability to rapidly control the hydrogen fuel flow is important for at least one additional reason with an electric hybrid powertrain system. Because backfiring in the intake manifold of a port-injected hydrogen fuelled reciprocating internal combustion engine may be a problem in certain operating regimes, engine 400 has a temperature and absolute pressure (TMAP) sensor 447 mounted in intake plenum 449 (FIG. 1).

TMAP sensor 447 is employed in a method to control backfire, as illustrated by means of a flow chart in FIG 3. Backfiring typically causes an almost instantaneous increase in intake manifold temperature and sometimes, pressure. After commencement in the block 1310, TMAP sensor 447 continuously senses at block 1312, these intake plenum temperature and pressure. Then, at block 1314, engine controller 914 compares the measured values for temperature, and if desired, pressure, to predetermined threshold values. If the answer to the question at block 1314 is "no", the routine merely continues. If the answer is "yes", the routine proceeds to block 1316, wherein controller 914 cuts of the fuel by setting the injector pulse widths to zero. Then at block 1318, controller 914 checks to see whether the sensors and elapsed time indicate that the backfire has ceased. If so, fuelling will be resumed at block 1320. During the period of non-fuelling, the electrodrive system may be used at block 1322 to compensate for the torque deficit which would otherwise occur. Of course, electrodrive assist will be available only if various conditions are met, such as adequate battery state of charge, suitable road speed, and other conditions.

Spark plugs 460 (only one shown) are electrically coupled to an ignition system 462, preferably a so-called "coil-on-plug" ignition system, which is also controlled by the ECM 914.

Engine 400 further includes at least one air charge boosting device 436, such as a centrifugal-type supercharger, for increasing the power output of the engine. In one embodiment of the engine, a centrifugal supercharger is belt driven from the engine's front end accessory drive (FEAD) and nominally provides 90 kpa (gauge) boost at an engine speed of 5000 rpm. Supercharging, however, has the undesired effect of heating the intake air and thus making the engine more susceptible to pre-ignition. This ultimately limits the power output of the engine. Therefore, to minimize air heating, a dual-stage intercooling system is provided. The dual-stage intercooling system includes an air-to-air intercooler 438 in communication with the supercharger 436, and an air conditioning-to-air intercooler 442 disposed downstream of the air-to-air intercooler 438 for further reduction of air temperature. Nominally, the air conditioning-to-air intercooler 442 is operated under high boost conditions using R-134 as the cooling medium.

Oil consumption control measures are provided to prevent auto-ignition and to substantially reduce carbon-based and nitrous oxide emissions. Accordingly, cylinder 402 is machined, using deck plate cylinder bore honing, to optimise the geometry of the cylinder walls. The end gaps of the piston rings in ring pack 411 are optimised for increased pressure and reliability, as are the valve stem seals to minimize oil pull-by and to improve wear resistance.

A positive crankcase ventilation (PCV) system incorporating separator 452 and check valves 446 and 448, as well as venturi 434, is also included to remove oil vapour from crankcase gases. Such a system is described for example in U.S Patent No. 6,606, 982. The PCV system is an emission control system designed to extract combusted and partially combusted gases from the crankcase and re-burn them, and in particular can be used with a pressurized/vacuum induction system to provide improved oil/air separation.

As a result of the lean air/hydrogen fuel mixture, supercharging and intercooling, engine 400 of FIG. 1 is optimised for maximum efficiency, power and range. In addition, the oil control measures described above serve to substantially minimize hydrocarbon, NOx, and CO2 emissions of engine 400.

## Claims

1. A method for changing the fuel delivery rate for a hydrogen fuelled internal combustion engine having pulsed fuel injectors including, for each cylinder, a low flow fuel injector and a high flow fuel injector, comprising the steps of:
increasing the fuel delivery rate by increasing the pulse width of the low flow injector until the flow rate has reach an overlap value;
operating the high flow injector at a rate approaching the overlap value; and
simultaneously decreasing the pulse width of the low flow injector such that the total flow from the high and low flow injectors is equal to the maximum flow from the low flow injector.

2. A method according to claim 1, further comprising the steps of:
decreasing the fuel rate from a higher fuelling rate by decreasing the pulse width of the high flow rate injector until the flow rate has reached the overlap value; and
simultaneously operating said low flow injector at the overlap value, while turning said high flow injector off.

## Patentansprüche

1. Verfahren zur Änderung der Kraftstoffabgabemenge für eine mit Wasserstoff betriebene Brennkraftmaschine mit pulsierend betätigten Kraftstoffeinspritzdüsen mit, für jeden Zylinder, einer Kraftstoffeinspritzdüse mit niedrigem Durchsatz und einer Kraftstoffeinspritzdüse mit hohem Durchsatz, folgende Schritte beinhaltend:
Erhöhen der Kraftstoffabgabemenge durch Erhöhen der Pulsbreite der Kraftstoffeinspritzdüse für niedrigen Durchsatz, bis der Durchsatzwert einen Überlappungswert erreicht hat;
Betreiben der Kraftstoffeinspritzdüse für hohen Durchsatz mit einem sich dem Überlappungswert nähernden Durchsatz; und
gleichzeiges Absenken der Pulsbreite der Kraftstoffeinspritzdüse für niedrigen Durchsatz, so daß der Gesamtdurchsatz von den Kraftstoffeinspritzdüsen für hohen und für niedrigen Durchsatz gleich dem Maximaldurchsatz der Kraftstoffeinspritzdüse mit niedrigem Durchsatz ist.

2. Verfahren nach Anspruch 1, außerdem folgende Schritte beinhaltend:
Senken der Kraftstoffabgabemenge von einem höheren Kraftstoffdurchsatz herab durch Senken der Pulsbreite der Kraftstoffeinspritzdüse für hohen Durchsatz, bis der Durchsatzwert den Überlappungswert erreicht hat; und
gleichzeitiges Betätigen der besagten Kraftstoffeinspritzdüse für niedrigen Durchsatz mit dem Überlappungswert, während besagte Kraftstoffeinspritzdüse für hohen Durchsatz abgeschaltet wird.

## Revendications

1. Un procédé pour changer le taux d'approvisionnement en carburant pour un moteur à combustion interne alimenté à l'hydrogène et possédant des injecteurs de carburant à impulsion comprenant, pour chaque cylindre, un injecteur de carburant à faible débit et un injecteur de carburant à haut débit, comprenant les étapes consistant à :
augmenter le taux d'approvisionnement en carburant en accroissant la largeur d'impulsion de l'injecteur à faible débit, jusqu'à ce que le taux de débit ait atteint une valeur de chevauchement ;
faire fonctionner l'injecteur à haut débit au niveau d'un taux approchant la valeur de chevauchement ; et
diminuer simultanément la largeur d'impulsion de l'injecteur à faible débit jusqu'à ce que l'écoulement total des injecteurs à haut débit et à faible débit soit égal à l'écoulement maximal de l'injecteur à faible débit.

2. Un procédé selon la revendication 1, comprenant en outre les étapes consistant à :
diminuer le débit de carburant depuis un débit de carburant plus élevé, en diminuant la largeur d'impulsion de l'injecteur à haut débit jusqu'à ce que le taux de débit ait atteint la valeur de chevauchement ; et
faire simultanément fonctionner ledit injecteur à faible débit au niveau de la valeur de chevauchement, pendant que le fonctionnement dudit injecteur à haut débit est interrompu.
